Europäisches Patentamt

(19) European Patent Office

Office européen des brevets

(11) Publication number: **0 051 356**
**B1**

(12) **EUROPEAN PATENT SPECIFICATION**

(45) Date of publication of patent specification: **13.08.86**

(51) Int. Cl.⁴: **G 02 F 1/03, G 02 F 1/315**

(21) Application number: **81304272.8**

(22) Date of filing: **17.09.81**

(54) **Electro-optic devices.**

(30) Priority: **17.09.80 US 187936**
**17.09.80 US 187918**
**17.09.80 US 187919**
**17.09.80 US 188171**
**06.10.80 US 194525**

(43) Date of publication of application:
**12.05.82 Bulletin 82/19**

(45) Publication of the grant of the patent:
**13.08.86 Bulletin 86/33**

(84) Designated Contracting States:
**AT BE DE FR GB IT NL**

(56) References cited:
**EP-A-0 021 754**
**EP-A-0 027 551**
**FR-A-2 316 613**
**GB-A-2 068 577**
**US-A-3 958 862**

**APPLIED PHYSICS LETTERS, vol. 23, no. 4, August 15, 1973, New York, US, J.M. HAMMER et al. "Fast electro-optic waveguide deflector modulator", pages 176-177**

(73) Proprietor: **XEROX CORPORATION**
**Xerox Square - 020**
**Rochester New York 14644 (US)**

(72) Inventor: **Turner, William D.**
**1022 Roxbury Road**
**San Marino California 91108 (US)**
Inventor: **Sprague, Robert A.**
**13755 Calle Tacuba**
**Saratoga California 95070 (US)**
Inventor: **Hartke, David H.**
**1427 S. Genesee Avenue**
**Los Angeles California 90019 (US)**

(74) Representative: **Weatherald, Keith Baynes et al**
**European Patent Attorney Rank Xerox Limited Patent Department 338 Euston Road London NW1 3BH (GB)**

(56) References cited:
**JOURNAL OF PHYSICS D: APPLIED PHYSICS, vol. 7, no. 18, 1974, Letchworth-Hertfordshire, GB, V. RAMACHANDRAN et al. "Noise generated in the total internal reflection electro-optic diffraction deflector/modulator", pages 2479-2482**

**Kmetz and Willisen: "No nemissive electrooptic displays", Plenum Press, New York and London, 1975, pages 303-341**

## Description

This invention relates to electro-optic devices and, more particularly, to proximity-coupled optical valves for electro-optic line printers and the like.

It has been shown that an electro-optic element having a plurality of individually addressable electrodes can be used as a multi-gate light valve for line printing. See, for example, "Light Gates Give Data Recorder Improved Hardcopy Resolution," *Electronic Design*, July 19, 1979, pp. 31-32; "Polarizing Filters Plot Analog Waveforms," *Machine Design*, Vol 51, No. 17, July 26, 1979, p. 62; and "Data Recorder Eliminates Problem of Linearity," *Design News*, February 4, 1980, pp. 56—57.

As is known, almost any optically transparent electro-optic material can be used as the electro-optic element of such a light valve. The most promising materials now appear to be $LiNbO_3$ and $LiTaO_3$, but there are other materials which qualify for consideration, including BSN, KDP, $KD^xP$, $Ba_2NaNb_5O_{15}$ and PLZT. In any event, the electrodes of such a light valve are intimately coupled to the electro-optic element and are distributed in non-overlapping relationship widthwise of the electro-optic element (i.e., orthogonally relative to its optical axis), typically on equidistantly separated centers so that there is a generally uniform interelectrode gap spacing.

To perform line printing with a multi-gate light valve of the foregoing type, a photosensitive record medium, such as a xerographic photoreceptor, is exposed in an image configuration as it advances in a cross line direction (i.e., a line pitch direction) relative to the light valve. More particulary, to carry out the exposure process, a sheet-like collimated light beam is transmitted through the electro-optic element of the light valve, either along its optical axis for straight-through transmission or at a slight angle relative to that axis for total internal reflection. Furthermore, succesive sets of digital bits or analog signal samples (hereinafter collectively referred to as "data samples"), which represent collections of picture elements or pixels for successive lines of the image, are sequentially applied to the electrodes. As a result, localized electric bulk or fringe fields are created within the electro-optic element in the immediate vicinity of any electrodes to which non-reference level data samples are applied. These fields, in turn, cause localized variations in the refractive index of the electro-optic element within an interaction region (i.e., a light beam illuminated region of the electro-optic element which is subject to being penetrated by the electric fields). Thus, the phase front or polarization of the light beam is modulated (hereinafter generically referred to as "p-modulation" of the light beam) in accordance with the data samples applied to the electrodes as the light beam passes through the interaction region. Schlieren readout optics may be used to convert a phase front modulated light beam into a light beam having a correspondingly modulated intensity profile. For example, the phase front modulated light beam may be imaged onto the record medium by central dark field or central bright field imaging optics. Alternatively, if the input light beam is polarized, a polarization modulation to intensity modulation conversion process may be performed by passing the polarization modulated output beam through a polarization analyzer. In more generic terms, the p-modulation of the light beam is converted into a correspondingly modulated intensity profile by using "p-sensitive readout optics" to image or project (hereinafter collectively referred to as imaging) the light beam onto the record medium

A related invention, which was not published before at the priority date of this application, forms the subject-matter of EP—A1—0 021 754, relating as it does to an electro-optic modulator using the fringe fields of linear electrodes to modulate the phase of light fronts internally reflected from a face closely adjacent to the electrodes.

'Applied Physics Letters', Vol. 23, Aug 1973, pp. 176/7, "Fast electro-optic waveguide deflector modulator", J. M. Hammer *et al* discloses using the fringe fields of interdigital electrodes to effect the selective diffraction of light coupled into and out of a planar waveguide. The electrodes are carried by a substrate which is pressed into contact with an otherwise-exposed face of the waveguide.

In accordance with the present invention, and as claimed in the appended claims, the electrodes are carried by an integrated circuit member having active elements controlled by input data signals in a manner such that the active elements apply voltages selectively to the electrodes to generate localised electric fringe fields corresponding to the prevailing data signals.

It has been found that proximity-coupled electro-optic devices are sensitive to variation in the physical displacement of different points on the electrodes from the electro-optic element, such as may be caused by the mating surfaces of the electrodes and the electro-optic element having non-complementary contours. Thus, in keeping with one of the more detailed features of this invention, it has been recognized that the electrodes of an electro-optic device having a flexible electrode-bearing member, such as a silicon integrated circuit, may be re-contoured as required to conform to the mating surface of the electro-optic element by resiliently biasing the electrode-bearing member thereagainst. The bias is typically supplied by a compressed elastomeric pressure pad which underlies the flexible electrode-bearing member. In that event, the pressure pad is preferably coëxtensive with the electrode-bearing portion of the flexible member so that a more or less uniform bias is applied throughout that area.

It has also been found that proximity-coupled electro-optic devices may require excessibe drive voltages if the electric fields are coupled into the electro-optic element through an air gap. A gap is inherently present because of the surface roughness of the electrodes and the electro-optic element, possible defects in those surfaces, and entrapped dust particles. Indeed, in keeping with another of the detailed aspects of this invention, the electrodes may be mechanically gapped a predetermined nominal distance from the electro-optic element to reduce to field irregularities that might otherwise be caused such gap irregularities. However, in keeping with still another of the detailed aspects of this invention, it has been recognized that the inherent gap, or the mechanically-created gap, between the electrodes and the electro-optic element of a proximity-copuled electro-optic device may be filled with a dielectric having a relative dielectric constant (i.e., the dielectric constant relative to that of air) which is substantially greater than 1, thereby increasing the coupling efficiency and further reducing the adverse effects of any gap irregularities.

Still other features and advantages of this invention will become apparent when the following detailed description is read in conjunction with the attached drawings, in which:

Figure 1 is a schematic side view of an electro-optic line printer including a proximity coupled TIR multi-gate light valve which embodies the present invention;

Figure 2 is a schematic worm's eye view of the electro-optic line printer shown in Fig. 1;

Figure 3 is an enlarged side view of a TIR light valve for the electro-optic line printer of Figs. 1 and 2 which shows the resilient biasing of a flexible electrode-bearing member that is provided in accordance with one aspect of this invention;

Figure 4 is an enlarged cutaway bottom view of the TIR light valve of Fig. 3 showing a pattern of individually addressable electrodes;

Figure 5 is a simplified block diagram of a system for applying differentially encoded serial input data to the individually addressable electrodes of the electrode pattern shown in Fig. 4;

Figure 6 is an enlarged and fragmentary schematic end view of the TIR light valve shown in Fig. 3 to illustrate the improved conformance of the electrodes to the mating surface of the electro-optic element that is achieved by virtue of the bias applied to the conformable electrode substrate;

Figure 7 is an enlarged and fragmentary schematic plan view of the electrode pattern of Fig. 4 as embodied on a silicon integrated circuit, and

Figure 8 in an enlarged cutaway bottom view of an alternative TIR light valve embodiment which is characterized by having rails for spacing the electrodes from the crystal.

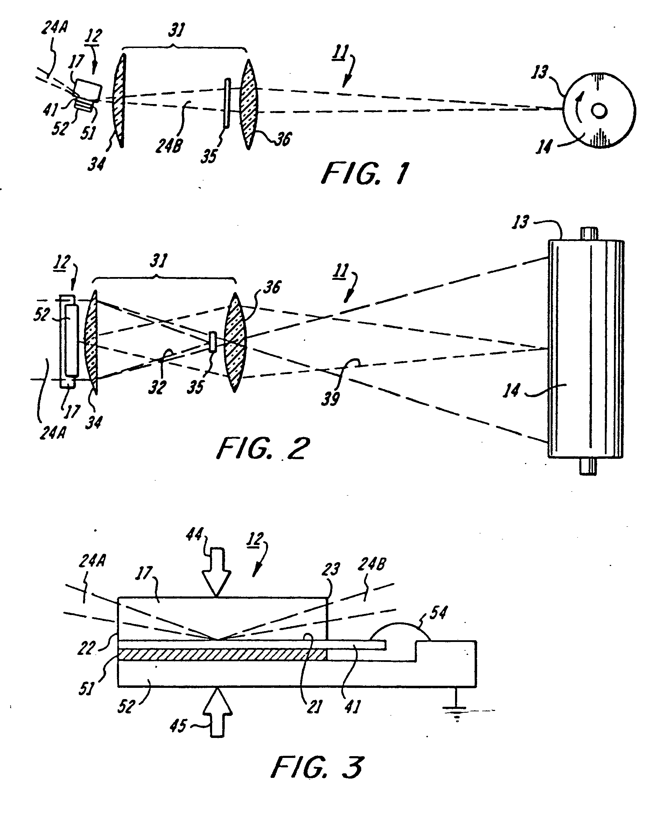

Turning now to the drawings, and at this point especially to Figs. 1 and 2, there is an electro-optic line printer 11 comprising a multi-gate light valve 12 for exposing a photosensitive record medium 13 in an image configuration. The record medium 13 is depicted as being a photoconductively coacted xerographic drum 14 which is rotated (by means not shown) in the direction of the arrow. However, it will be evident that there are other xerographic and non-xerographic record media that could be used, including photoconductively coated xerographic belts and plates, as well as photosensitive films and coated papers. The record medium 13 should therefore, be visualized in the generalized case as being a photosensitive medium which is exposed in an image configuration while advancing in a cross line or line pitch direction relative to the light valve 12.

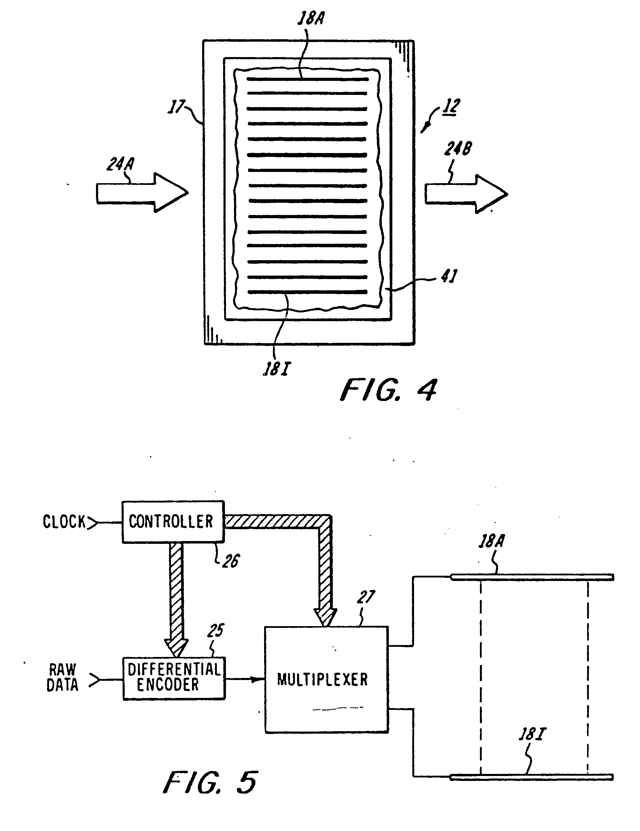

As shown in Figs. 3 and 4, the light valve 12 includes an electro-optic element 17 and a plurality of individually addressable electrodes 18A—18I. For a total internal reflection (TIR) mode of operation, such as illustrated, the electro-optic element 17 suitably is a y-cut crystal of, say, $LiNbO_3$ having an optically-polished reflecting surface 21 which is integral with and disposed between optically-polished input and output faces 22 and 23, respectively. The elctrodes 18 are intimately coupled to the electro-optic element 17 adjacent the reflecting surface 21 and are distributed across essentially the full width thereof. Typically, the electrodes 18 are 1—30 µm wide and are on centers which are more or less equidistantly separated to provide a generally uniform interelectrode gap spacing of 1—30 µm. In this particular embodiment the electrodes 18 extend generally parallel to the optical axis of the electro-optic element 17 and have projections of substantial length along that axis. Alternatively, the electrodes 18 could be aligned as the so-called Bragg angle relative to the optical axis of the electro-optic element 17. As will be appreciated, if the electrodes 18 are aligned parallel to the optical axis of the electro-optic element 17, the light valve 12 will produce a diffraction pattern which is symmetrical about the zero order diffraction component. If, on the other hand, the electrodes 18 are at the Bragg angle relative to the optical axis of the electro-optic element 17, the light valve 12 will produce an asymmetrical diffraction pattern.

Briefly reviewing the operation of the line printer 11 depicted in Figs. 1—4, a sheet-like collimated beam of light 24a from a suitable source, such as a laser (not shown), is transmitted through the input face 22 of the electro-optic element 17 at a grazing angle of incidence relative to the reflecting surface 21. The input light beam 24A is brought to a wedge-shaped focus (by means not shown) at approximately the centerline of the reflecting surface 21 and is totally internally reflected therefrom to provide an output beam 24B which exits from the electro-optic element 17 through its output face 23. As will be seen, the input beam 24A illuminates substantially the full width of the electro-optic element 17, and the output beam 24B is phase front modulated in accordance with the differentially encoded data samples applied to the electrodes 18A—18.

More particularly, as shown in Fig. 5, serial input data samples, which represent picture elements for successive lines of an image, are applied to a differential encoder 25 at a predetermined data rate. The encoder 25 differentially encodes the input samples on a line-by-line basis in response to control signals from a controller 26, and a multiplexer 27 responds to further control signals from the controller 26 to ripple the encoded data samples onto the electrodes 18 at a ripple rate which is matched to the data rate. The input data may, of course, be buffered (by means not shown) to match the input data rate to any desired ripple rate. Additionally, the input data may be processed (by means also not shown) upstream of the encoder 25 for text editing, formatting or other purposes, provided that the data samples for the ultimate image are applied to the encoder 25 in adjacent picture element sequence.

As a matter of definition, each differentially encoded data sample, other than the first sample for each line of the image, has a magnitude whose difference from the previous differentially encoded data sample corresponds to the magnitude of a respective input data sample. The first sample for each line of the image is referenced to a common reference potential, such as ground. Thus, all picture elements are faithfully represented by the electrode-to-electrode voltage drops that are produced in response to the differentially encoded data.

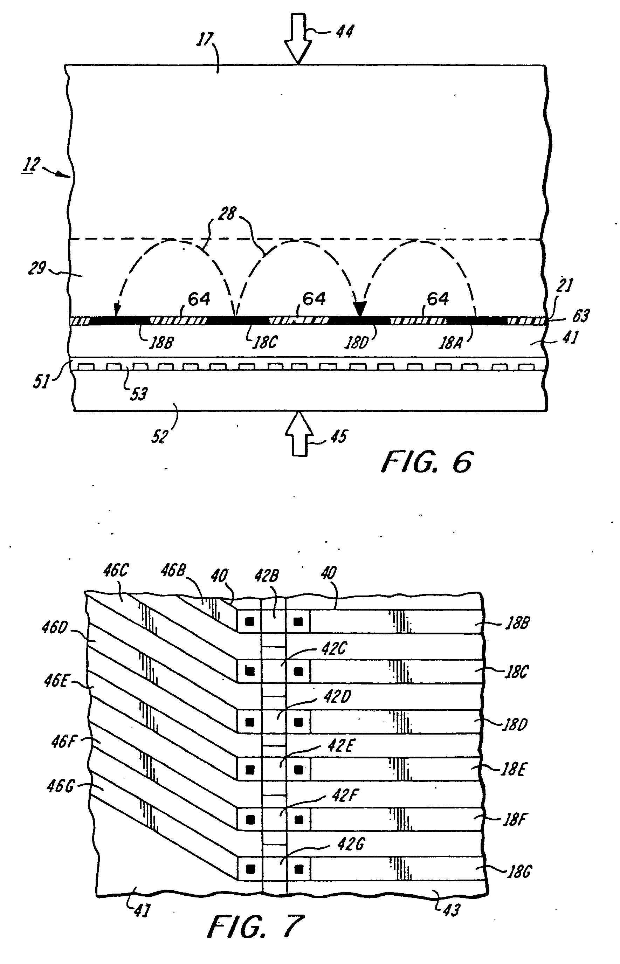

Referring to Fig. 6, the electrode-to-electrode voltage drops create localized fringe fields 28 within an interaction region 29 of the electro-optic element 17. Furthermore, the fringe fields 28, in turn, cause localized variations in the refractive index of the electro-optic element 17 widthwise of the interaction region 29. The voltage drop between any adjacent pair of electrodes, such as 18B and 18C, or 18C and 18D, determines the refractive index for the portion of the interaction region 29 which bridges between those two electrodes. Hence, the refractive index variations within the interaction region 29 faithfully represent the input data samples appearing on the electrodes 18A—18I in differentially encoded form at any given point in time. It therefore follows that the phase front of the light beam 24A (Fig. 3) is sequentially spatially modulated in accordance with the data samples for successive lines of the image as it passes through the interaction region 29 of the electro-optic element 17.

Returning for a moment to Figs. 1 and 2, to expose the record medium 13 in an image configuration, there suitably are Schlieren central dark field imaging optics 31 which are optically aligned between the electro-optic element 17 and the record medium 13 for imaging the modulated light beam 24b onto the record medium 13. The imaging optics 31 convert the spatial phase front modulation of the output beam 24B into a correspondingly modulated intensity profile and provide any magnification required to obtain an image of a desired width. To accomplish that, the illustrated imaging optics 31 include a field lens 34 for focusing the zero order diffraction components 32 of the phase front modulated light beam 24B onto a central stop 35 and an imaging lens 36 for imaging the higher order diffraction components onto the record medium 13, i.e., the image plane for the light valve 12. The field lens 34 is optically aligned between the electro-optic element 17 and the stop 35 so that substantially all of the zero order components 32 of the modulated light beam 24B are blocked by the stop 35. The higher order diffraction components of the output beam 24B scatter around the stop 35 and are collected by the imaging lens 36 which, in turn, causes them to fall onto the light valve image plane defined by the record medium 13. Of course, other p-sensitive readout optics could be used to convert the phase front or polarization modulated light beam provided by the electro-optic element 17 into a light beam having a correspondingly modulated intensity profile.

To summarize, as indicated in Fig. 2 by the broken lines 39, each neighboring pair of electrodes, such as 18B and 18C (Fig. 6), coöperates with the electro-optic element 17 and with the p-sensitive readout optics 31 to define a local modulator for creating a picture element at a unique, spatially predetermined position along each line of the image. Accordingly, the number of electrodes 18A—18I determines the number of picture elements that can be printed per line of the image. As will be appreciated, successive lines of the image are printed by sequentially applying successive sets of differentially encoded data samples to the electrodes 18 while the record medium 13 is advancing in a cross line direction relative to the light valve 12. It should be noted that the differential encoding step may be avoided if ground plane electrodes (not shown) are interposed in alternating paired relationship between the individually addressable electrodes 18.

As most clearly depicted in Fig. 7, the electrodes 18 are defined by a suitably patterned, electrically conductive layer, generally indicated by 40, which is deposited on an integrated electrical circuit 41, such as a LSI (large scale integrated) silicon circuit, to make electrical contact to the integrated drive electronics 42B—42G. For example, as illustrated, the multiplexer 27 is embodied in the integrated circuit 41, and the electrodes 18A—18I are an extension of the metallised or polysilicon layer 40 which is used to make electrical connections to the output transfer gates or pass transistors 42B—42G and to the other individual components (not shown) of the multiplexer 27. The pass transistors 42B—42G and the other components of the multiplexer 27 are formed on the integrated circuit 41 by using more or less standard LSI component fabrication techniques, and the metallised or polysilicon layer 40 is then deposited on the outer surface 43 of the integrated circuit 41. An etching process or the like is subsequently used to pattern the electrically conductive layer 40 as required to provide electrically independent connections to the electrically independent components of the multiplexer 27 and to form the electrically independent electrodes 18A—18I (only the electrodes 18B—18G can be seen in Fig. 7). For instance, the data transfer lines 46B—46G for the pass transistors 42B—42G are defined in the metallised or polysilicon layer 40 by the same etching process which is used to define the electrodes 18.

In keeping with one of the more detailed aspects of this invention, as shown in Figs. 3 and 6, the integrated circuit 41 may be resiliently biased against the reflective surface 21 of the electro-optic element 17, thereby causing the electrodes 18 to conform to the contour of the mating surface 21. A clamp or similar bonding agent, which is schematically represented by the arrows 44 and 45, maintains the electrode-bearing surface of the integrated circuit 41 in pressure contact with the reflective surface 21. Moreover, a resilient pressure pad 51 or the like applies a more or less uniform bias to the electrode-bearing portion of the integrated circuit 41 so that the integrated circuit 41 flexes as required to cause the electrodes 18 to conform closely to the contour of the reflective surface 21. As will be appreciated, the improved conformance of the electrodes 18 to the mating or reflective surface 21 of the electro-optic element 17 increases the uniformity with which the fringe fields 28 are coupled into the electro-optic element 17, thereby increasing the spatial uniformity of the electro-optic response of the light valve 12. The electrodes 18, or the reflective surface 21 of the electro-optic element 17, may be overcoated with a thin dielectric layer (not shown) if the direct contact of the electrodes 18 with the electro-optic element 17 tends to cause unacceptable levels of spurious amplitude and/or phase modulation of the output light beam 24B.

More particularly, to cause the electrodes 18 to conform to the contour of the reflective surface 21, the pressure pad 51 is disposed between the integrated circuit 41 or a flexible package therefor (not shown) and a rigid base plate 52 so that the pressure pad 51 is compressed under the influence of the clamps 44 and 45. The pressure pad 51 underlies the electrode-bearing portion of the integrated circuit 41 and is generally coëxtensive therewith. Thus, the restorative forces generated by the compressed pressure pad 51 are more or less uniformly distributed over the electrode-bearing portion of the integrated circuit 41 to urge or bias that portion of the integrated circuit 41 toward the reflective surface 21 of the electro-optic element 17. Becuase of its inherent flexibility, the integrated circuit 41 flexes as necessary under the influence of that bias to cause the electrodes 18 to conform to the contour of the reflective surface 21.

In practice, the pressure pad 51 is preferably fabricated from a readily-deformable elastomer so that it deforms as necessary to accommodate any macroscopic variations in the thickness or flatness of the electro-optic element 17, the integrated circuit 41, and the base plate 52. Indeed, the integrated circuit 41 and the base plate 52 are both shown in Fig. 6 as having exaggerated thickness and flatness variations which are taken-up by the compressive deformation of the pressure pad 51. If the pressure pad 51 is composed of a relatively incompressible elastomer, such as silicon rubber, it may be ribbed or otherwise relieved, as at 53 (Fig. 6), to increase its compressibility. Microscopic variations, such as the ordinary surface roughness of the electro-optic element 17 and of the electrodes 18, have relatively little effect on the deformation of the pressure pad 51 and can be ignored for present purposes.

The base plate 52 desirably is an electrically conductive member which is referenced to a suitable ground potential so that a ground return path for the integrated circuit 41 may be completed thereto. If the pressure pad 51 is, say, a silicon rubber or a carbon-loaded elastomer which is in electrical contact with both the substrate of the integrated circuit 41 and the base plate 52, the ground return path may be completed through the pressure pad 51. Otherwise, the ground return path may be completed by connecting one or more grounding wires 54 between the substrate of the integrated circuit 41 and the base plate 52.

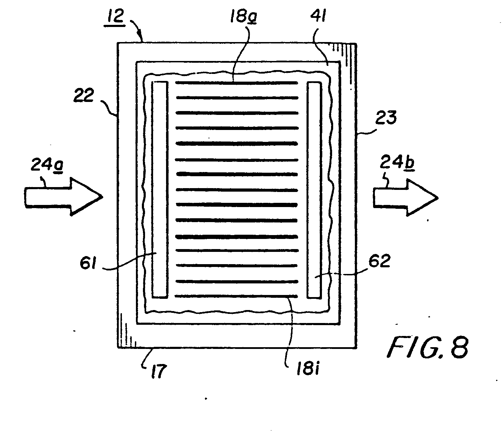

Alternatively, as shown in Figure 8, to reduce the sensitivity of the light valve 12 to variations in the physical displacement of different points on the electrodes 18 from the electro-optic element 17, rails 61 and 62 or similar spacers may be provided for mechanically maintaining the electrodes 18 at a small predetermined nominal gap distance from the electro-optic element 17. The rails 61 and 62 are preferably located on opposite sides of the interaction region 29 of the electro-optic element 17 so that the interaction region 29 is free of pressure differentials which might cause undesirable piezoelectric effects. For example, as shown the rails 61 and 62 are formed on the electrode-bearing integrated circuit 41 near its lead edge and trail edges, respectively, to engage the electro-optic element 17 forward and aft, respectively, of the interaction region 29. As another approach, the rails 61 and 62 could be formed on the integrated circuit 41 near its front and back edges, respectively, to engage the electro-optic element 17 on opposite lateral sides of the interaction region 29. Still another possibility is to form the rails 61 and 62 on the electro-optic element 17 to engage the electrode substrate 41 either forward and aft or on opposite lateral sides of the electrodes 18.

In any event if mechanical gapping is used, the interelectrode gap spacing of the electrodes 18 must be sufficiently large compared with the nominal gap spacing provided by the rails 61 and 62 to ensure that the fringe fields 28 span the gap 63 to penetrate the electro-optic element 17 as previously described. For example, if the interelectrode gap spacing is on the order of 5 μm, the rails 61 and 62 are each selected to have sufficient height to provide a nominal gap 63 on the order of 0.10 μm. Of course, increased or decreased interelectrode gap spacings may require or permit a corresponding change in the heights of the rails 61 and 62.

In accordance with still another aspect of this invention, the gap 63 between the electrodes 18 and the electro-optic element 17 advantageously is completely filled with a dielectric material 64 (Fig. 6) having a relative dielectric constant that is significantly greater than 1. The dielectric 64 may be a fluid which completely floods the gap 63 and which is confined therein by suitable seals (not shown), or the dielectric 64 may be a material, such as formvar or methyl methacrylate, which can be loaded into the gap 63 while in a liquid state and then cured *in situ* into a solid state. Still another possibility is to use a finely-divided solid dielectric which is dispersed in a suitable carrier. It can be shown that there is a $\sin^2$ relationship between the diffraction efficiency of the electro-optic element 17 and the strength of the fringe fields 28 created therein. Thus, the relative dielectric constant of the dielectric 64 is selected to be as high as possible to minimize the effective electrical thickness of the gap 63, thereby maximizing the coupling efficiency. It should however, be noted that a marked increase in the coupling efficiency is realized, even if the dielectric 64 has a relative dielectric constant as low as 3 or 4.

The gap is provided by the rails 61 and 62 (Fig. 8) is a convenient cavity for accommodating the dielectric 64, but a dielectric interface is useful even if there is a relatively irregular gap between the electrodes 18A—18I and the electro-optic element 17. Indeed one of the advantages of using the dielectric 64 as an interface between the electrodes 18 and the electro-optic element 17 is that is reduces the effect of any gap irregularities on the relative strengths of the fringe fields 28 that are coupled into the electro-optic element 17 through such an irregular gap.

It should be emphasized that proximity coupling is particularly relevant to multi-gate light valves and the like which are characterized by having a multitude of electrodes to which separate electrical connections must be made. As will be recalled, it has been shown that such electrical connections may be readily completed through an electrode-supporting LSI circuit.

Furthermore, it will be appreciated that the present invention provides several solutions to the problem of avoiding field irregularities in a multigate light valve having proximity-coupled electrodes. In particular, it has been shown that the electrodes can be conformed to the contour of the electro-optic element of the light valve or can be mechanically spaced from the electro-optic element. Moreover, it has been shown that the mechanically-created gap, or the inherent gap, between the electrodes and the electro-optic element of such a device may be filled with a dielectric having a high relative dielectric constant to improve the coupling efficiency of the device and to reduce further any field irregularities that may be caused by gap irregularities.

**Claims**

1. An optical multigate valve (12), including a plurality of electrodes (18a—18i) carried by an integrated circuit member (41) having active elements (42b—42g) controlled by input data signals in a manner such that the active elements apply voltages selectively to the electrodes to generate localised electric fringe fields corresponding to the prevailing data signals, and, physically-distinct from the integrated circuit member, an electro-optic element (17) intended to have an input beam of radiation totally internally reflected off a face (21) thereof, the electro-optic element having the said electrodes closely adjacent the said face so that the electric fringe fields produce local perturbations in the refractive index of the material of the electro-optic element sufficient to modulate the radiation spatially wihin an interaction region (29) in accordance with the prevailing data signals as the radiation travels through the material, the electrodes being defined by a patterned electroconductive layer (40) of the integrated circuit.

2. The valve of Claim 1, in which the electro-optic element (17) has a predetermined optical axis to which the reflective face (21) is generally parallel, in which the valve includes means for applying a sheet-like, collimated input beam of radiation (24A) to the electro-optic element (17) at a grazing angle of incidence relative to the reflective face (21), and in which the electrodes have projections of substantial length along the optical axis.

3. The valve of Claim 2, in which the electro-optic element is an electro-optic crystal having and optically-polished input face (22) through which the input beam (24A) enters, and an optically-polished output face (23) through which the output beam (24B) leaves the crystal, and in which the reflective face (21) is another optically-polished face of the crystal (17) which is disposed between the input and output faces.

4. The valve of Claim 2 or 3, in which the electrodes and spaced apart orthogonally relative to the optical axis of the electro optic-element (17) and withwise of the input beam (24A); in which at least every other one of the electrodes is independently addressable, and in which the voltages applied to the independently-addressable electrodes are data samples which are cyclically supplied to represent sequential picture elements for successive lines of an image, whereby the fringe fields sequentially and spatially modulate the beam in accordance with the picture elements for the successive lines of the image.

5. The valve of any preceding claim, in which the integrated circuit member (41) is flexible, and in which the valve additionally includes a rigid base plate (52), and resilient means (51), compressed between the integrated circuit member (41) and the base plate (52), for applying a distributed bias to the integrated circuit member (41), the bias urging the integrated circuit member (41) toward the reflective face (21), thereby causing the electrodes to conform generally with the face (21).

6. The valve of Claim 5, in which the resilient means (51) is an elastomeric pressure pad, whereby the bias is generally uniformly distributed.

7. The valve of Claim 6, in which the pressure pad (51) is electro-conductive and is in electrical contact with the integrated circuit (41), whereby an earth return path for the integrated circuit (41) is completed through the pressure pad (51).

8. The valve of any preceding claim, including spacer means (61—62) disposed between the integrated circuit member (41) and the electro-optic element (17) for mechanically spacing the electrodes (18) from the element by a predetermined distance, the spacer means engaging the element outside the interaction region (29), whereby the interaction region is substantially free of any differential contact pressures.

9. The valve of any preceding claim, including a dielectric medium (64) disposed between the element and the integrated circuit member, the dielectric substantially filling any gap (63) between the element and the integrated circuit member, and having a relative dielectric constant which is substantially greater than unity, thereby reducing the effective electrical thickness of the gap and the efffect of any gap irregularities on the uniformity of the fields.

**Patentansprüche**

1. Optisches Mehrfachtorventil (12) mit einer Vielzahl Elektroden (18a—18i), die von einem integrierten Schaltkreiselement (41) getragen sind, welches aktive Elemente (42b—42g) aufweist, die von Eingangsdatensignalen derart gesteuert werden, daß die aktiven Elemente wahlweise Spannungen an die Elektroden anlegen, um örtliche, elektrische Streufelder zu erzeugen, die den vorliegenden Datensignalen entsprechen, und mit einem physikalisch, von dem integrierten Schaltkreiselement unterschiedenen, elektro-optischen Element (17), mit dem ein Eingangsstrahlenbündel innen von einer Seite (21) total reflektierbar ist, wobei sich die Elektroden nah benachbart dieser Seite des elektro-optischen Elementes befinden, so daß die elektrischen Streufelder örtliche Störungen des Brechungsindex des Materials des elektro-optischen Elementes hervorrufen, die ausreichen, die Strahlung räumlich innerhalb eines Wechselwirkungsbereiches (29) in Übereinstimmung mit den vorhandenen Datensignalen zu modulieren, wenn die Strahlung durch das material hindurchgeht, wobei die Elektroden als eine mit einem Muster versehene, elektrisch leitfähige Schicht (40) des integrierten Schaltkreises festgelegt sind.

2. Ventil nach Anspruch 1, bei dem das elektro-optische Element (17) eine vorbestimmte, optische Achse aufweist, zu der die reflektierende Seite (21) allgemein parallel läuft, bei dem das Ventil Mittel umfaßt, um ein flaches, kollimiertes Eingangsstrahlungsbündel (24A) unter einem streifenden Einfallswinkel in Bezug auf die reflektierende Seite (21) auf das elektro-optische Elemente (17) anzuwenden, und bei dem sich die Elektroden über eine wesentliche Länge längs der optischen Achse erstrecken.

3. Ventil nach Anspruch 2, bei dem das elektro-optische Element ein elektro-optischer Kristall ist, der eine optisch polierte Eintrittsseite (22), durch die das Eintrittsbündel (24A) eintritt, und eine optische polierte Austrittsseite, durch die hindurch das Ausgangsbündel (24B) den Kristall verläßt, aufweist, und bei dem die reflektierende Seite (21) eine weitere optische polierte Seite des Kristalls (17) ist, die zwischen der Eintritts- und der Austrittsseite angeordnet ist.

4. Ventil nach Anspruch 2 oder 3, bei dem die Elektroden voneinander orthogonal in Bezug auf die optische Achse des elektro-optischen Elementes (17) und in Breitenrichtung des Eintrittsbündels (24A) beabstandet sind, bei dem wenigstens jede zweite der Elektroden unabhängig adressierbar ist und bei dem die an die unabhängig adressierbaren Elektroden anzulegenden Spannungen Datenworte sind, welche zyklisch zugeführt werden, um anfeinanderfolgende Bildelemente für aufeinanderfolgende Bildzeilen darzustellen, wodurch die Streufelder aufeinanderfolgend und räumlich das Bündel in Übereinstimmung mit dem Bildelementen der aufeinanderfolgenden Bildzeilen modulieren.

5. Ventil nach einem der vorhergehenden Ansprüche, bei dem das integrierte Schaltkreiselement (41) nachgiebig ist und bei dem das Ventil zusätzlich eine steife Grundplatte (52) und ein elastisches Mittel (51) aufweist, welches zwischen dem integrierten Schaltkreiselement (41) und der Grundplatte (52) zusammengedrückt ist, um eine verteilte Vorspannung auf das integrierte Schaltkreiselement (41) anzuwenden, wobei die Vorspannung das integrierte Schaltkreiselemente (41) in Richtung auf die reflektierende Seite (21) drückt, wodurch bewirkt wird, daß sich die Elektroden allgemein an die Seite (21) anpassen.

6. Ventil nach Anspruch 5, bei dem das elastische Mittel (51) ein elastomeres Druckkissen ist, wodurch die Vorspannung allgemein gleichförmig verteilt wird.

7. Ventil nach Anspruch 6, bei dem das Druckkissen (51) elektrisch leitfähig ist und sich in elektrischer Berührung mit dem integrierten Schaltkreis (41) befindet, wodurch ein Erderückführweg für den integrierten Schaltkreis (41) durch das Druckkissen hindurch (51) vervollständigt wird.

8. Ventil nach einem der vorhergehenden Ansprüche, bei dem Abstandsmittel (61—62) zwischen dem integrierten Schaltkreiselement (41) und dem elektro-optischen Element (17) zur mechanischen Beabstandung der Elektronen (18) von dem Element mit einem vorbestimmten Abstand angeordnet sind, wobei die Abstandsmittel mit dem Element außerhalb des Wechselwirkungsbereiches (29) in Eingriff stehen, wodurch der Wechselwirkungsbereich im wesentlichen von irgendwelchen Berührungsdruckunterschieden frei ist.

9. Ventil nach einem der vorhergehenden Ansprüche mit einem zwischen dem Element und dem integrierten Schaltkreiselement angeordneten dielektrischen Medium (64), wobei das Dielektrikum in wesentlichen jeden Spalt (63) zwischen dem Element und dem integrierten Schaltkreiselement füllt und eine spezifische Dielektrizitätskonstante aufweist, die wesentlich größer als die Einheit ist, wodurch die effektive, elektrische Dicke des Spaltes und die Wirkung von irgendwelchen Spaltunregelmäßigkeiten auf die Gleichförmigkeit der Felder verringert wird.

## Revendications

1. Valve optique multiportes (12), comportant une multitude d'électrodes (18a—18i) portées par un élément de circuit intégré (41) ayant des éléments actifs (42b—42g) commandés par des signaux de données d'entrée d'une manière telle que les éléments actifs appliquent sélectivement des tensions aux électrodes dans le but de produire des champs électriques internes localisés correspondant aux signaux de données prévalant, et, physiquement distincts de l'élément de circuit intégré, un élément électro-optique (17) conçu pour qu'un faisceau de rayonnement d'entrée soit totalement réfléchi par l'une de ses faces (21), l'élément électro-optique ayant les électrodes étroitement contiguës à ladite face de sorte que les champs électriques internes produisent des perturbations locales dans l'indice de réfractions du matériau de l'élément électro-optique qui sont suffisantes pour moduler spatialement le rayonnement à l'intérieur d'une zone d'interaction (29) en conformité avec les signaux de données prévalant alors que la radiation se propage dans le matériau, les électrodes étant définies par une couche photoconductrice (40) à motif du circuit intégré.

2. Valve selon la revendication 1, dans laquelle l'élément électro-optique (17) a un axe optique prédéterminé auquel la face réfléchissante (21) est généralement parallèle, en ce que le valve comprend un moyen pour appliquer un faisceau d'entrée collimaté en forme de feuille d'un rayonnement (24A) à un élément électro-optique (17) suivant un angle d'incidence rasant par rapport à la face réfléchissante (21), et en ce que les électrodes ont des saillies de longueur importante suivant l'axe optique.

3. Valve selon la revendication 2, dans laquelle l'élément électro-optique est un cristal électro-optique ayant une face d'entrée polie optiquement (22) par l'intermédiaire de laquelle entre le faisceau d'entrée (24A), et une face de sortie polie optiquement (23) par l'intermédiaire de laquelle le faisceau de sortie (24B) quitte le cristal, et dans laquelle la face réfléchissante (21) est une autre face polie optiquement du cristal (17) qui est disposée entre les faces d'entrée et de sortie.

4. Valve selon la revendication 2 ou la revendication 3, dans laquelle les électrodes sont espacées orthogonalement par rapport à l'axe optique de l'élément électro-optique (17) et dans le sens de la largeur du faisceau d'entrée (24A); en ce qu'au moins toutes les deux électrodes sont adressables indépendamment, et en ce que les tensions appliquées aux électrodes adressables indépendamment sont des échantillons de données qui sont fournis cycliquement de manière à représenter des éléments séquentiels d'image pour des lignes successives d'une image, d'où il résulte que les champs internes modulent séquentiellement et spatialement le faisceau en conformité avec les éléments d'image pour les lignes successives de l'image.

5. Valve selon l'une quelconque des revendications précédentes, dans laquelle l'élément de circuit intégré (41) est flexible, et la valve comprend en outre une plaque de base rigide (52) et un élément élastique (51), comprimé entre l'élément de circuit intégré (41) et la plaque de base (52), pour appliquer une solllicitation répartie à l'élément de circuit intégré (41), la sollicitation entraînant l'élément de circuit intégré (41) vers la face réfléchissante (21), d'où il résulte que les électrodes épousent la forme générale de la face (21).

6. Valve selon la revendication 5, dans laquelle le moyen élastique (51) est un tampon de pression en élatsomère, d'où il résulte que la sollicitation est généralement répartie de manière uniforme.

7. Valve selon la revendication 6, dans laquelle le tampon de pression (61) est conducteur de l'électricité et se trouve en contact électrique avec le circuit intégré (41), d'où il résulte qu'un trajet de retour de masse pour le circuit intégré (41) est complété par l'intermédiaire du tampon de pression (51).

8. Valve selon l'une quelconque des revendications précédentes, comprenant un moyen d'entretoise (61—62) disposé entre l'élément de circuit intégré (41) et l'élément électro-optique (17) pour espacer mécaniquement les électrodes (18) de l'elément suivant une distance prédéterminée, le moyen d'entretoise étant en contact avec l'élément à l'extérieur de la zone d'interaction (29), d'où il résulte que la zone d'interaction est sensiblement exempte des pressions différentielles de contact.

9. Valve selon l'une quelconque des revendications précédentes, comprenant un milieu diélectrique (64) disposé entre l'élément et l'élément de circuit intégré, le diélectrique remplissant pratiquement tout interstice (63) entre l'élément et l'élément de circuit intégré, et ayant une constante diélectrique relative qui est sensiblement supérieure à l'unité, d'où la réduction de l'épaisseur électrique effective de l'interstice et de l'effet des irrégularités de l'interstice sur l'uniformité des champs.

FIG. 1

FIG. 2

FIG. 3

*18A*

*17*

*12*

*24A*

*24B*

*41*

*18I*

*FIG. 4*

CLOCK

CONTROLLER

*26*

*27*

*18A*

DIFFERENTIAL
ENCODER

*25*

RAW
DATA

MULTIPLEXER

*18I*

*FIG. 5*

FIG. 6

FIG. 7

*FIG. 8*